# EUROPEAN PATENT APPLICATION

(11) **EP 4 838 214 A2**
(43) Date of publication of application: **11.11.2026**
(21) Application number: 26177097.8
(22) Date of filing: 07.05.2026
(51) Int. Cl.: G01N 30/20

(54) **GAS CHROMATOGRAPH LIQUID SAMPLE VALVE**

(30) Priority: 07.05.2025 US 202519200945; 04.05.2026 US 202619666775
(71) Applicant: ABB Schweiz AG, 5400 Baden (CH)
(72) Inventor: MCCAFFERTY, Garrett A., Broken Arrow, 74014 (US); LAKEY, Steven G., Bartlesville, 74003 (US); HUFF, Damian C., Bartlesville, 74006 (US)
(74) Representative: Maiwald GmbH

(57) **Abstract**

A sample valve includes a sample chamber, piston chamber, and piston stem. The sample chamber is configured to receive a fluid sample and extending from a receiver to a delivery portion of a piston chamber. The piston chamber extends from a pneumatic chamber to a sample output and includes a first seal on a first side of the delivery portion, a second seal on a second side of the delivery portion, and a vaporization chamber between the second seal and the sample output. The piston stem includes a groove of a predetermined volume configured to receive the fluid sample in the delivery portion and carry the fluid sample seated in the groove past the second seal into the vaporization chamber when the piston stem is driven through the piston chamber.

## Description

### CROSS-REFERENCE TO RELATED APPLICATIONS

The instant application is a continuation in part of U.S. Application Ser. No. 19/200,945, filed on May 7, 2025, which is incorporated herein in its entirety by reference.

### FIELD

The present disclosure relates to gas chromatography. In particular, the present disclosure relates to a liquid sample valve for a gas chromatograph device.

### BACKGROUND

A gas chromatograph is an analytical instrument used in chemistry for separating and analyzing compounds that can be vaporized. The process involves injecting a gaseous or liquid (e.g., fluid) sample from a sample valve into a mobile phase, typically with an inert or nonreactive carrier gas such as helium, argon, nitrogen, or hydrogen. This gaseous stream is passed through a stationary phase (e.g., contained inside a separation column). The components of the sample move at different velocities through the column, depending on their chemical and structural properties (e.g., physical properties) and their interactions with the stationary phase. As each fluid component exits the column, it is detected and identified electronically. Many gas chromatograph columns are located inside an oven where the temperature of the gas can be controlled and the effluent coming off the column can be monitored by a suitable detector. However, the sample receivers typically include components and assemblies that are sensitive to assembly and maintenance errors. For instance, sample stems may bend due to the mishandling during assembly, causing seals to prematurely fail due to metal-on-metal contact of the vaporization chamber and the sample stem. This can also lead to leakage of toxic chemicals from the sample and vaporization chambers. Additionally, sample valves may include mechanical spring assemblies demanding complex installation and assembly processes, such as a specific number of turns when tightening a fastener (e.g., Belville washers for compression of a seal), or special tools for installation of the sample chamber. Deviation from these processes can cause catastrophic failure for the sample valve or chromatograph if foreign debris is allowed to enter.

### SUMMARY

In one aspect, the present disclosure describes a sample valve, comprising: an actuator; a valve body portion forming a piston chamber, the valve body portion being removably connected to the actuator and containing a sample chamber configured to receive a fluid sample and extending from a receiver to a delivery portion of a piston chamber; wherein the piston chamber extends from a pneumatic chamber formed in the actuator to a sample output and comprising a first seal on a first side of the delivery portion, a second seal on a second side of the delivery portion, and a vaporization chamber between the second seal and the sample output; and a piston stem comprising a notch (or groove) of a predetermined volume configured to receive the fluid sample in the delivery portion and carry the fluid sample seated in the groove past the second seal into the vaporization chamber when the piston stem is driven through the piston chamber.

In another aspect, the disclosure describes a modular sample valve system, comprising: a sample valve, a gas feed through, an analytical module, and a gas chromatography module, wherein the sample valve, is removably connected to the gas feed through, and to the gas chromatography module to form, together, a system of modules; wherein the system of modules is mountable to an explosion proof housing, and wherein the gas feedthrough is formed as an assembly that includes a gas feed through body and a gas feedthrough core that concentrically floats internally to the gas feedthrough body between the gas feedthrough and the sample valve.

In one embodiment, the sample valve is removably attached in an aligned fashion to the gas feedthrough.

In one embodiment, fluid connections of the sample valve are restricted such that an explosion does not propagate to the sample valve or to the analytical module.

In one embodiment, the gas feed through assembly is mounted via a threaded interface into the explosion proof housing.

In one embodiment, the gas feedthrough core restricts fluid flow such that an explosion shall not propagate to the analytical module or to the exterior of the explosion proof housing.

In a first aspect, the present disclosure provides a sample valve, comprising: a sample chamber configured to receive a fluid sample and extending from a receiver to a delivery portion of a piston chamber; the piston chamber extending from a pneumatic chamber to a sample output and comprising a first seal on a first side of the delivery portion, a second seal on a second side of the delivery portion, and a vaporization chamber between the second seal and the sample output; and a piston stem comprising a groove of a predetermined volume configured to receive the fluid sample in the delivery portion and carry the fluid sample seated in the groove past the second seal into the vaporization chamber when the piston stem is driven through the piston chamber.

Examples may include one of the following features, or any combination thereof. For instance, in some examples of the sample valve, the sample chamber and piston chamber are arranged in a unitary valve body.

In some instances of the sample valve, the sample chamber extends in a direction perpendicular to the piston chamber.

In some variations of the sample valve, a second sample chamber extends coaxially to the sample chamber from the delivery portion to a second receiver.

In some examples of the sample valve, the vaporization chamber comprises an inner wall of a radius greater than a radius of an outer wall of the piston stem, wherein a gap is formed between the inner wall and the outer wall that defines a travel space, and wherein the travel space is configured to receive the fluid sample.

In some instances of the sample valve, the sample valve further comprises a carrier gas channel extending to the vaporization chamber, the carrier gas channel configured to provide a carrier gas to the fluid sample in the travel space before the fluid sample enters the sample output.

In some variations of the sample valve, the groove extends radially into the piston stem.

In some examples of the sample valve, the pneumatic chamber is configured to pneumatically drive the piston stem at a predetermined force.

In some instances of the sample valve, the sample valve further comprises a heater configured to apply heat to the vaporization chamber when the fluid sample is received in the vaporization chamber.

In some variations of the sample valve, the sample output comprises a slip fit interface.

In another aspect, the present disclosure provides a gas chromatography system, comprising a sample valve comprising: a sample chamber configured to receive a fluid sample and extending from a receiver to a delivery portion of a piston chamber; the piston chamber extending from a pneumatic chamber to a sample output and comprising a first seal on a first side of the delivery portion, a second seal on a second side of the delivery portion, and a vaporization chamber between the second seal and the sample output; and a piston stem comprising a groove of a predetermined volume configured to receive the fluid sample in the delivery portion and carry the fluid sample seated in the groove past the second seal into the vaporization chamber when the piston stem is driven through the piston chamber. The system also comprises: a gas feedthrough configured to deliver a vaporized sample from the sample output to an analytical module; and a gas chromatography module configured to receive the vaporized sample from the analytical module and measure an attribute of the vaporized sample.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 illustrates a liquid sample valve in accordance with one or more embodiments of the present disclosure;
FIG. 2 illustrates a liquid sample valve installed with an analytical module according to one or more examples of the present disclosure;
FIG. 3 illustrates a liquid sample valve installed with an analytical module and a gas chromatography module according to one or more examples of the present disclosure;
FIG. 4 illustrates a liquid sample valve installed in an explosion-proof housing according to one or more examples of the present disclosure;
FIG. 5 illustrates a liquid sample valve installed with an analytical module and a gas chromatography module in an explosion-proof housing according to one or more examples of the present disclosure;
FIG. 6 illustrates a liquid sample valve with a piston stem in a retracted position according to one or more examples of the present disclosure;
FIGS. 7A and 7B illustrate a liquid sample valve with a piston stem in a driven position according to one or more examples of the present disclosure; and
FIG. 8 illustrates a flow of fluid through the liquid sample valve according to one or more examples of the present disclosure.
FIG. 9 is a second embodiment for a liquid sample valve with a piston stem in a retracted position in accordance with the disclosure.
FIG. 10 is a section view through the second embodiment of the liquid sample valve in accordance with the disclosure.
FIG. 11 is a section view of the second embodiment for a liquid sample valve showing a flow of fluids through the liquid sample valve in accordance with the disclosure.

### DETAILED DESCRIPTION

Examples of the present disclosure will now be described more fully hereinafter with reference to the accompanying figures, in which some examples of the disclosure are shown. Indeed, the disclosure may be exemplified in different forms and should not be construed as limited to the examples set forth herein; rather, these examples are provided so that the disclosure will satisfy applicable legal requirements. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on".

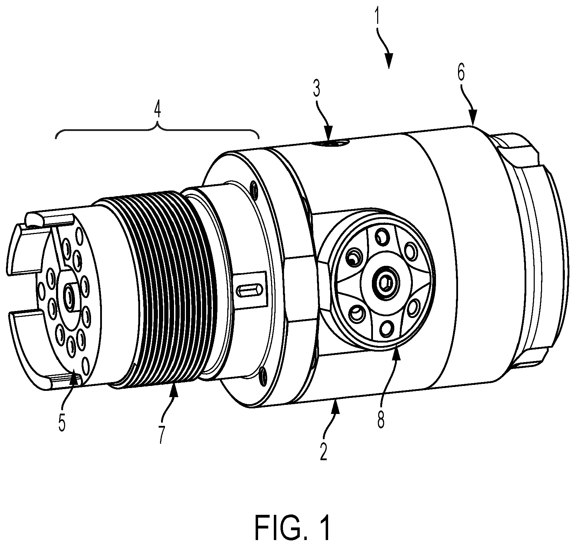

FIG. 1 depicts a liquid sample valve 1 in accordance with one or more embodiments of the present disclosure. The liquid sample valve 1 includes a unitary body portion 2, a vaporization chamber portion 4 that provides a gas feedthrough, a sample output 5, and a pneumatic chamber portion 6. The body portion 2 includes a sample chamber inlet 3 (e.g., for a liquid sample) in addition to a complimentary sample chamber outlet opposite the sample chamber inlet 3. The gas feedthrough portion 4 can include a threaded or a slip fit interface 7. The liquid sample valve 1 also includes gas ports (e.g., inlets and/or outlets) defined through an interface plate 8.

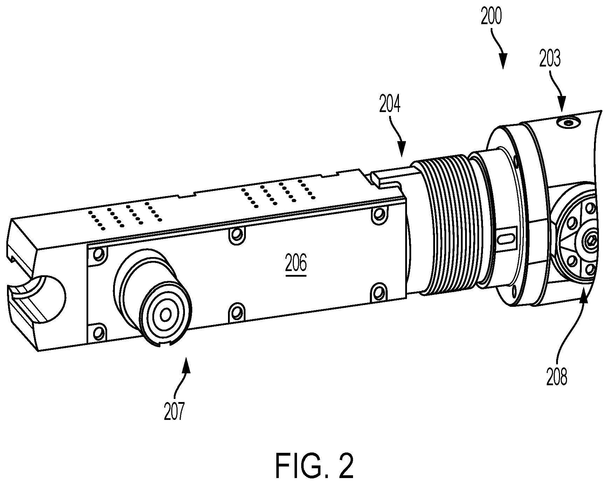

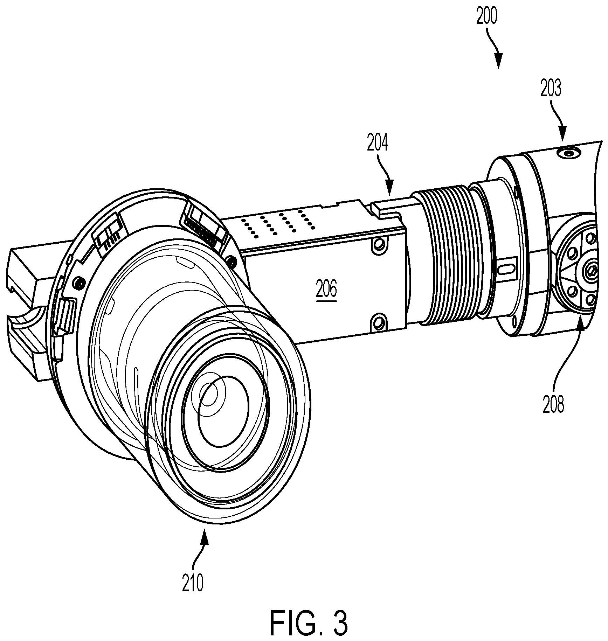

FIGS. 2 and 3 depict a liquid sample valve 200 installed in fluidic communication with an analytical module 206 in accordance with one or more embodiments of the present disclosure. For instance, a chromatograph device according to one or more embodiments of the present disclosure can receive a sample fluid to be analyzed from the gas feedthrough portion 204, such as a liquid sample via sample inlet 203. The sample inlet 203 may receive a sample, which is then vaporized using heat applied to the sample while the sample is present within a vaporization chamber. The vaporized sample is provided to the channels of an analytical module 206 including a base manifold. The analytical module 206 can direct the flow of a series of channels in the base manifold using inlets, vents, and valves, and can control the temperature and pressure of the fluid moving through these channels to assist in the chromatographic analysis. A gas chromatography module 210 (e.g., receiving and affixed in fluidic communication with a manifold post 207) can receive the sample from the analytical module 206 (e.g., via manifold post 207) and perform chromatographic analysis on the fluid, for example, by heating the fluid (e.g., vaporized sample from the liquid sample valve 200) flowing through columnar channels (e.g., columns) of a chromatograph oven to elute the components of the fluid (e.g., produce different gases travelling at different speeds through the columns). The fluid (e.g., the eluted components) passes through columns and past a detector (e.g., a thermal conductivity detector (TCD), flame ionization detector (FID), flame photometric detector (FPD), dielectric barrier discharge ionization (DBID)) which measures a structural and/or chemical feature of the fluid (e.g., a physical feature of the fluid). The gas chromatography module 210 can expel the fluid through the manifold post 207 and provide these measurements to a central computing unit. The central computing unit can then determine one or more structural and/or chemical features of the fluid. The expelled fluid can move through the base manifold and be expelled via external vents in the chromatograph device and/or via the gas ports of the interface plate 208.

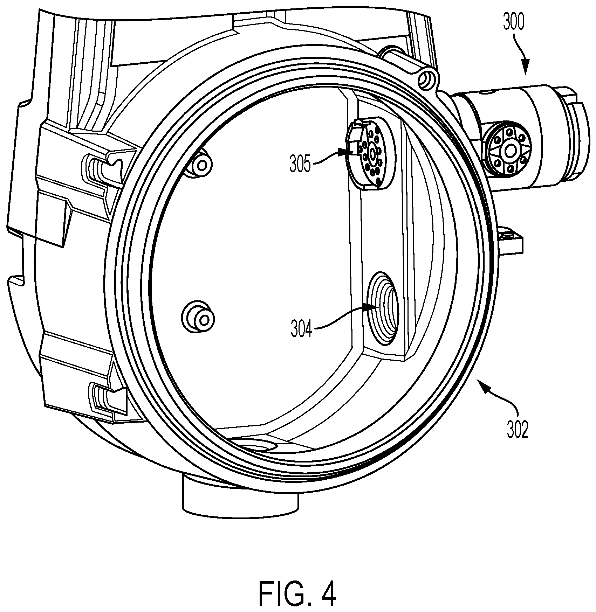

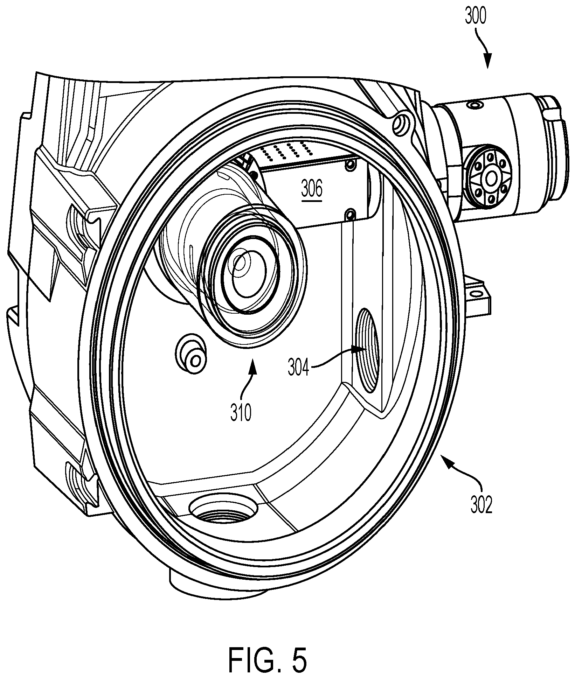

FIGS. 4 and 5 depict a liquid sample valve 300 installed in an explosion-proof housing 302 of a gas chromatograph device according to one or more embodiments of the present disclosure. The explosion-proof housing 302 can provide structures that seal the interior volume of the housing 302 from the external atmosphere and contain the interior volume of the housing 302. For example, while providing a more compact enclosure is itself an advantage, one or more embodiments are also able to provide an explosion proof enclosure due to the more compact construction, as it can limit the force of any internal combustion (e.g., due to a spark or flame) scaled to the size of the housing 302. Therefore, by making the housing 302 compact and/or contained, an explosion proof housing 302 can be provided.

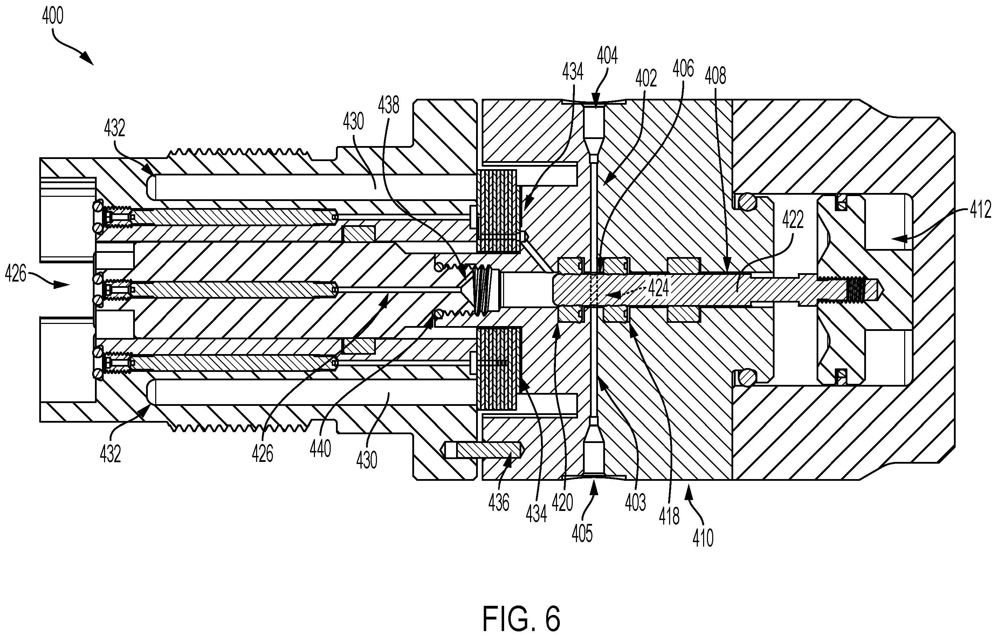

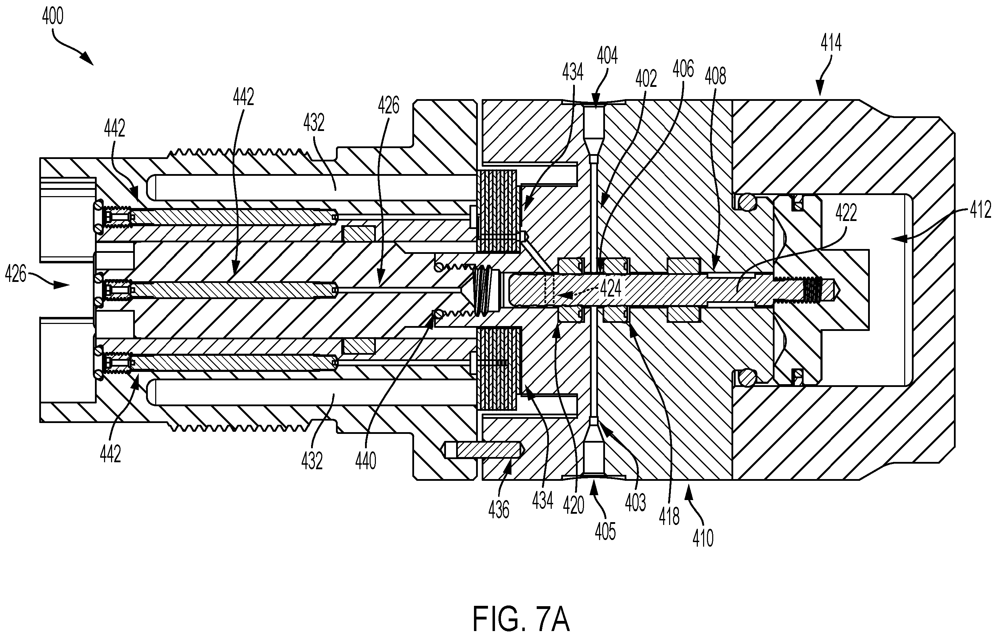

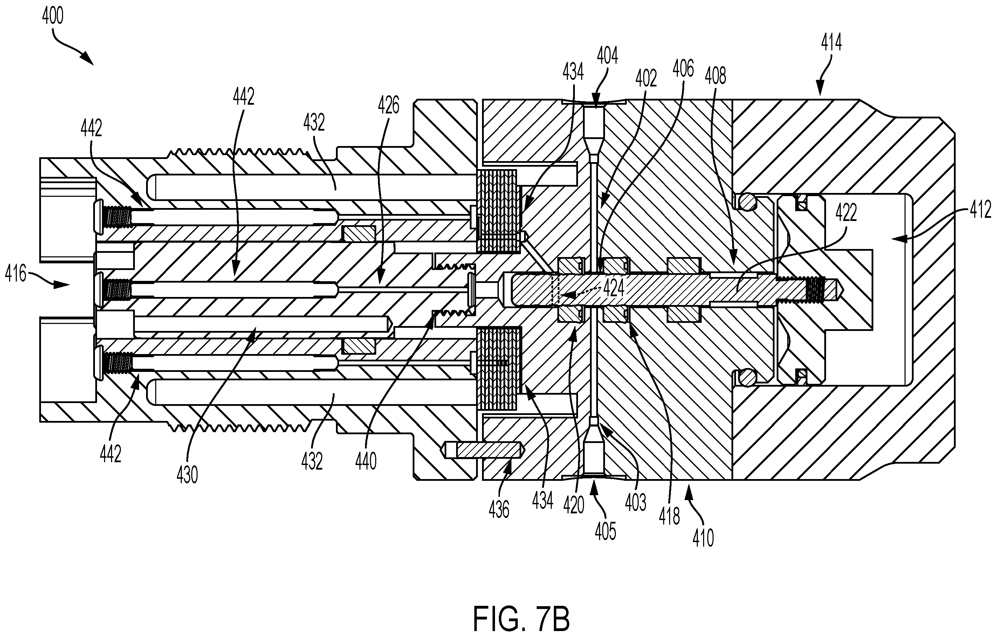

For example, the explosion-proof housing 302 can include at least one threaded interface 304 (e.g., shown in a side wall of housing 302) designed to receive and interface with a corresponding threaded interface of the gas feedthrough portion (e.g., the vaporization chamber portion 4 of FIG. 1) of the liquid sample valve 300 (e.g., threaded interface 7 of FIG. 1). As a result, the gas feedthrough portion can be fixed in the housing 302, and can even include flameproof components (e.g., flame arrestors 442 configured to absorb the heat from a flame front) for liquid channels. Additionally, and/or alternatively, the vaporization chamber portion of liquid sample valve 300 can be securely mounted (e.g., fixed) into the threaded interface 304, with the body portion (e.g., unitary body portion 2 of FIG. 1) of the liquid sample valve 300 mounted on one end and the analytical module 306 and gas chromatography module 310 mounted on the other end, thereby helping to maintain a constant alignment between the liquid sample valve 300 and the analytical module 306 during and after installation while keeping the liquid sample valve 300 external to the housing 302, reducing the footprint of housing 302. As a result, the threaded interface 304 helps not only to limit access by the interior volume to an external atmosphere, but helps to ensure proper alignment and positioning during installation and operation of the liquid sample valve 300, piston stem (e.g., piston stem 422 of FIGS. 6 and 7), and channel interface 305 with respect to the analytical module 306 (e.g., analytical module 206), reducing maintenance demands and costs resulting from misalignment wear and tear on components (e.g., misaligned piston stems bending and/or wearing grooves into seals) and/or sample leakage.

For example, FIGS. 6 and 7 depicts a cross section of a liquid sample valve 400 showing the interior of the liquid sample valve 400 and the operation of the pneumatic piston according to one or more examples of the present disclosure. The liquid sample valve 400 includes a sample chamber 402 configured to receive a fluid sample via a receiver 404 (e.g., inlet). The sample chamber 402 extends from the receiver 404 to a delivery portion 406 of a piston chamber 408, and the fluid sample flows from the receiver 404 through the sample chamber 402 into the delivery portion 406 of the piston chamber 408. As shown, the sample chamber 402 and the piston chamber 408 are both arranged in a unitary (e.g., monolithic) valve body portion 410 (e.g., both chambers are formed in the same one piece of metal).

The seals 418 and 420 can seal off the fluid sample from the rest of the piston chamber 408 by bounding the delivery portion 406 (e.g., the gap between the inner wall of the piston chamber 408 and the piston stem 422). Similarly, the sample chamber 402 can be machined (e.g., bored) into a unitary block of material (e.g., metal), such that the sample chamber 402 can be permanently aligned with the piston chamber 408 in the unitary body 410. For example, the sample chamber 402 can extend (e.g., be machined) in a direction perpendicular to the piston chamber 408, and a second sample chamber 403 can be positioned opposite the sample chamber 402. This second sample chamber 403 can extend coaxially to the sample chamber from the delivery portion 406 to a second fluid sample receiver 405 (e.g., an outlet). For example, the liquid sample can be received at the receiver 404, flow down the sample chamber 402 into the delivery portion 406, at least a portion of the liquid sample is received (e.g., becomes seated) in the groove 424, and any remainder of the liquid sample flows through the delivery portion 406 into the second sample chamber 403 and out the second sample receiver 405.

The piston chamber 408 extends from a pneumatic chamber 412 of the pneumatic chamber portion 414 to a sample output 416. The piston chamber 408 includes at least two seals, seal 418 and 420, that bound the delivery portion 406 of the piston chamber 408. For example, the piston chamber 408 includes a first seal 418 on a first side (e.g., right side as shown in FIG. 7A) of the delivery portion 406 and a second seal 420 on a second side (e.g., left side as shown in FIG. 7A) of the delivery portion 406. The piston stem 422 includes a groove 424 (e.g., a grooved portion of the piston stem 422) that defines a certain (e.g., predetermined) volume, and this groove 424 can extend circumferentially around the piston stem 422. For instance, with reference to an outer circumference of the piston stem 422, the groove 424 defines an area with a reduced circumference, and the volume between the area with the reduced circumference and where the outer circumference would be in that same area can be predetermined. As a result, the liquid sample that is received in the sample chamber 402 can flow through to delivery portion 406 and a portion of the liquid sample can be collected (e.g., seated) in the groove 424 of the piston stem 422 (e.g., a portion equal in volume or less than the volume of the groove 424).

The piston stem 422 can then carry the fluid sample seated in the groove 424 past the second seal 420 into the vaporization chamber 426 when the piston stem 422 is pneumatically driven through the piston chamber 408. For example, the pneumatic chamber 412 can be configured to pneumatically drive the piston stem 422 at a predetermined force (e.g., a minimum force, a configurable force, force range). For instance, the predetermined force can be specified as in the range of 40-60psi and can be adjustable or fixed. As shown in FIG. 6, the piston stem 422 is positioned with the groove 424 in the delivery portion 406 of the piston chamber 408. As shown in FIG. 7A, the piston stem 422 can be pneumatically driven forward, carrying the groove 424 underneath and past (e.g., slide underneath while in contact with) the seal 420 and into the beginning of the vaporization chamber 426. Additionally, and/or alternatively, the piston stem 422 can be driven backwards, retracting the groove 424 underneath and past the seal 420.

The piston chamber 408 also includes a vaporization chamber 426 (e.g., a portion of the piston chamber 408 in which the liquid sample is vaporized) located between the second seal 420 and the sample output 416. Additionally, and/or alternatively, a threaded receiver 438 (e.g. funnel) or a slip fit spacer with adjoining seals and a vaporization chamber seal 440 can be provided between the second seal 420 and the vaporization chamber 426 to help align and fix the vaporization chamber 426 portion to the portion of the piston chamber 408 in the unitary body 410 and to collect and receive the liquid sample from the portion of the piston chamber 408 in the unitary body 410. In the vaporization chamber 426 portion (e.g., a gas feedthrough), as shown in FIG. 7B, heaters 430 can be provided adjacent to the vaporization chamber 426, and the heaters 430 can be configured to apply heat to the vaporization chamber 426 (e.g., via conduction, radiation, convection) when the liquid sample is received in the vaporization chamber 426. The applied heat can facilitate and/or cause the transformation of the liquid sample into a vaporized sample before the vaporized sample exits via the sample output 416. For example, heaters 430 (e.g. heater cartridges) can be distributed around the vaporization chamber 426 (e.g., three heater bores positioned at three different circumferential points around the vaporization chamber 426), so that the metal surrounding the vaporization chamber 426 conveys heat from the cartridges in the bores for heaters 430 to the vaporization chamber 426 causing vaporization of the liquid sample. Complementary to the heaters 430, bores 432 (e.g., a machined feature to remove material from the gas feedthrough) can help wick heat away from the assembly (e.g., heat not being applied to the liquid sample).

Additionally, and/or alternatively, the vaporization chamber 426 includes a diffusion bonded plate 434 Additionally, and/or alternatively, a dowel pin 436 can be used to assist in the alignment of the vaporization chamber 426 during installation and use of the vaporization chamber portion 426 to the unitary body portion 410.

The piston chamber 408 and the vaporization chamber 426 can have a larger inner radius than the outer radius piston stem 422, so that the piston stem 422 does not slide against the inner wall of the piston chamber 408 when it is driven. In other words, the piston chamber 408 and/or the vaporization chamber 426 can include an inner wall of a radius greater than a radius of an outer wall of the piston stem 422, such that a gap is formed between the inner wall of the piston chamber 408 and/or the vaporization chamber 426 and the outer wall that defines a travel space. The portion of the travel space past the second seal 420 (e.g., in the vaporization chamber 426) can then allow for the fluid sample to be received from the groove 424 and vaporized. Additionally, and/or alternatively, the seals 418 and/or 420 can have a smaller inner radius than the inner radius of the piston chamber 408 so that the seals 418 and/or 420 protrude from an inner wall of the piston chamber 408 towards the piston stem 422. The seals 418 and/or 420 may then contact (e.g., press against) the piston stem 422 as the piston stem 422 slides through the seals 418 and/or 420 when the piston stem 422 is driven. In other words, the inner radius of the seals 418 and/or 420 may be the same or substantially the same (e.g., accounting for compression of the seals) as the outer radius of the piston stem 422. As a result, the risk of leaky seals or broken stems can be reduced because the gap between the wall of the piston stem 422 and the wall of the vaporization chamber 426 reduces frequency of contact between the piston stem 422 and an inner wall of the piston chamber 408. Additionally, and/or alternatively, the risk of the piston stem 422 working a groove into the seals 418 and/or 420 (e.g., thereby increasing the chance of leakage) can be reduced for the same reasons.

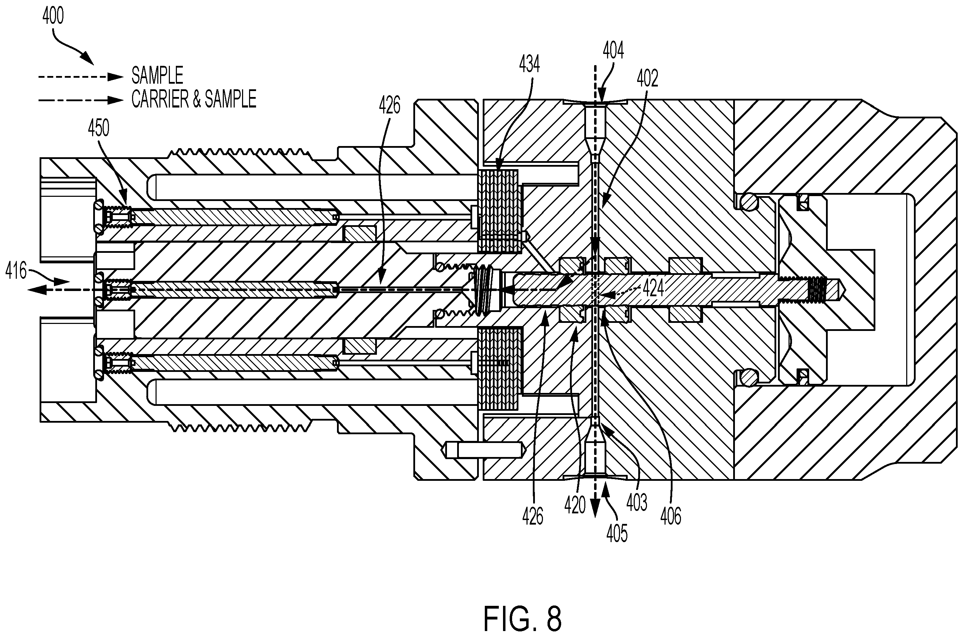

FIG. 8 depicts a flow of fluid through the liquid sample valve 400 according to one or more embodiments of the present disclosure. As described above, the liquid sample shown in short dashed lines, can be received at the receiver 404, flow down the sample chamber 402 into the delivery portion 406, at least a portion of the liquid sample is received (e.g., becomes seated) in the groove 424, and any remainder of the liquid sample flows through the delivery portion 406 into the second sample chamber 403 and out the second sample receiver 405. The liquid sample that is seated in groove 424 can then be driven past seal 420 into the beginning of the vaporization chamber 426. The vaporization chamber portion can include a carrier gas channel 450 extending from the sample output 416 interface to the piston chamber 408 (e.g., the beginning of the vaporization chamber 426), passing through the diffusion bonded plate 434. The carrier gas channel 450 can provide a carrier gas to flow (not shown) from the sample output 416 (e.g., where the carrier gas is received from the gas chromatograph device) to the liquid sample in the travel space of the piston chamber 408 before the liquid sample enters the sample output 416. The carrier gas can then elute with the liquid sample (e.g., before vaporization) and help to carry the vaporized sample along with the carrier gas (shown in short and long dashed line) through chromatography process (e.g., through the analytical module 206 and the gas chromatography module 210).

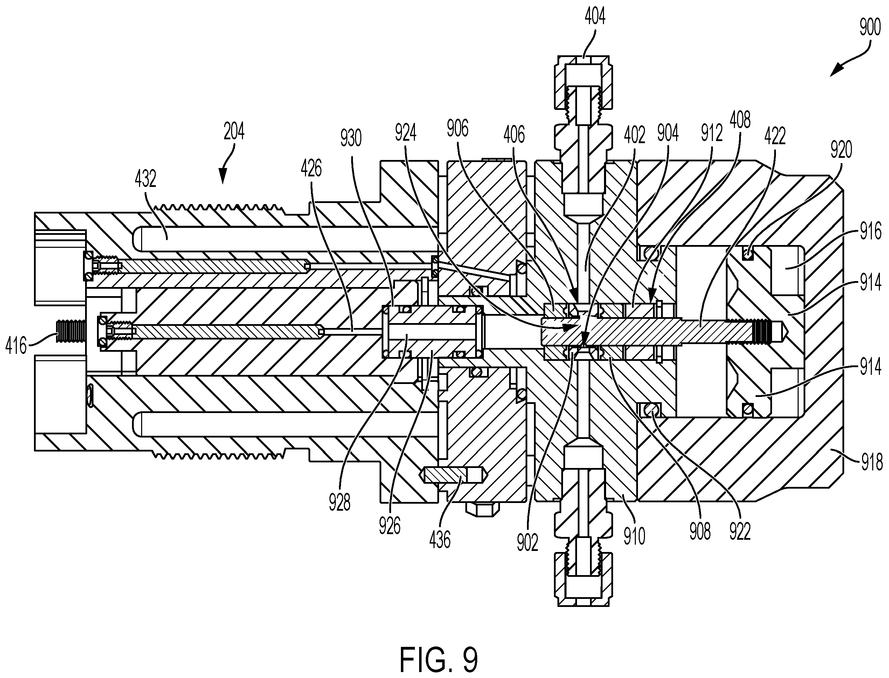

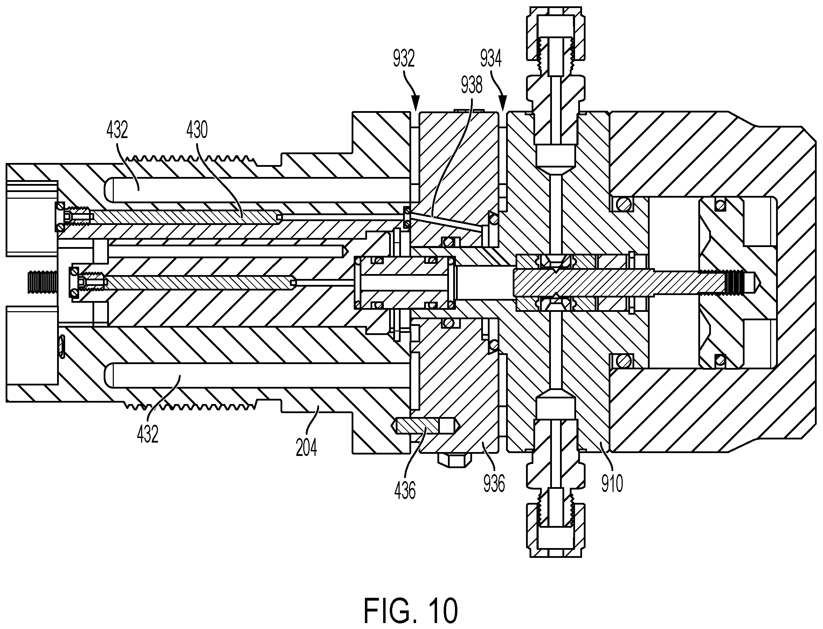

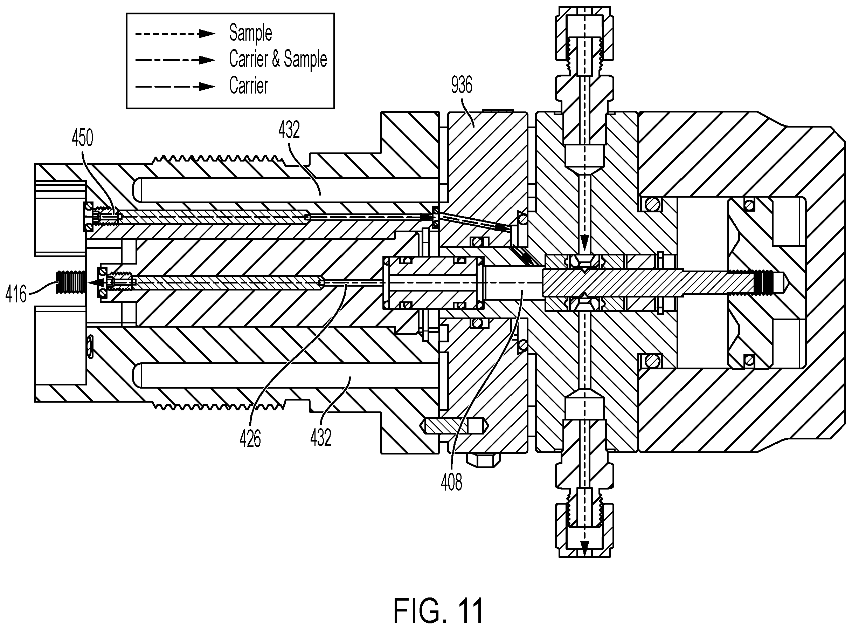

FIG. 9 is a section view through an alternative embodiment of a liquid sample valve 900, which is also shown in FIGs. 10 and 11. In these figures, structures and features that are the same or similar to corresponding structures and features previously used are denoted by the same reference numerals previously used for simplicity. Structures and features that are different or dissimilar than corresponding structures and features previously described relative to the embodiments shown in FIGs. 1-8 may be denoted by the same or different reference numerals in the discussion to aid in their description and comprehension.

In reference now to FIGs. 9-11, the liquid sample valve 900 includes a sample chamber 402 configured to receive a fluid sample via a receiver 404 (e.g., inlet). The sample chamber 402 extends from the receiver 404 to a delivery portion 406 of a piston chamber 408, and the fluid sample flows from the receiver 404 through the sample chamber 402 into the delivery portion 406 of the piston chamber 408, as was the case in the previous embodiment for a valve 400, shown in Fig. 6. However, unlike the sample chamber 402 and the piston chamber 408 of the valve 400, which are both arranged in a unitary (e.g., monolithic) valve body portion 410, in this embodiment, a valve body portion 910 includes a separate sleeve 902 that has a hollow cylindrical shape forming a main bore through which the piston 422 is accommodated, and a sample flow guide 904 that has a funnel shape that directs the sample from the sample chamber 402 towards the piston stem 422. The sample flow guide 904 is disposed in a transverse axis to the main bore that is generally aligned with the sample chamber 402.

Sliding seals 906 and 908 are disposed on either side of the sample flow guide 904 to seal the sample fluid and constrain the same to be fluidly accessible by the piston stem 422. A wear ring 912 slidably and sealably engages the piston stem 422 to maintain concentricity of the piston stem 422 relative to the piston bore 916 during operation. The pneumatic actuator 918 is removably attached to the valve body portion 910 such that it can be removed to expose the piston 914 and permit replacement of the air seal 912 as well as other pneumatic seals 920 and 922 without disassembling the remaining structures of the valve 900 from the structure in which it is used.

In the illustrated embodiment, the piston stem 422 includes a notch 924 (or groove) etched into is outer surface that accepts therein the sample from the sample flow guide 904. The notch 924 can have a concave conical shape that has a spread angle and depth that, together, define a specific volume that is filled with the sample, thus yielding a known quantity of sample that can be carried by the piston stem 422. When the piston stem 422 is loaded with a sample while in the retracted position, it moves the sample to mix with the carrier as the piston stem 422 assumes the extended position, as is the case with the previous embodiments. The flow direction of the sample, carrier, and mixture of sample and carrier in a vaporized condition is shown in FIG. 11, as denoted by the arrows.

As in the previous embodiment, the piston chamber 408 extends to a sample output 416 through a vaporization chamber 426. In this embodiment, a slip fit spacer or floating sleeve 926 is disposed between the piston chamber 408 and the sample output 416. The floating sleeve 926 has a hollow cylindrical shape that includes a central passage 928 through which the sample passes into the vaporization chamber 426. The central passage is aligned with the vaporization chamber 426 and permits some axial misalignment between the valve body portion 910 and the remaining structures, for example, the gas feedthrough portion 204.

In the embodiment shown, a receiver 930 forms a part of a bore that accepts the slip fit spacer or floating sleeve 926 therein. The floating sleeve includes radial seals that seal it with both structures with which it cooperates. This modular structure permits removal of the valve body portion 910 and the pneumatic actuator from the remaining structures without disturbing any of the other connections, i.e. without removing the gas feedthrough portion 204 from the structures with which it is connected.

In the illustrated embodiment, in the vaporization chamber 426 portion (e.g., a gas feedthrough), heaters 430 (as shown in FIG. 10) can be provided adjacent to the vaporization chamber 426, and the heaters 430 can be configured to apply heat to the vaporization chamber 426 (e.g., via conduction, radiation, convection) when the liquid sample is received in the vaporization chamber 426. The applied heat can facilitate and/or cause the transformation of the liquid sample into a vaporized sample before the vaporized sample exits via the sample output 416. To avoid heat conduction to the valve body portion 910, which can degrade the seals over time, air gaps 932 and 934 are provided between the valve body portion 910, the gas feedthrough portion 204, and an intermediate structure 936 that is disposed between the valve body portion 910 and the gas feedthrough portion 204, and that is formed as a separate piece and includes a passage 938 for the carrier fluid to meet the sample in the piston chamber 408. Assembly of the intermediate structure 936 is aligned with pins 436 as before and, advantageously, the intermediate structure 936 is removable without disturbing the remaining structures to permit service, seal replacement, and cleaning of the various modules of the valve 900 without needing to remove the gas feedthrough from the structures with which it is connected.

FIG. 11 depicts a flow of fluid through the liquid sample valve 900 according to one or more embodiments of the present disclosure. As described above, the liquid sample can be received at the receiver 404, flow down the sample chamber 402 into the delivery portion 406, at least a portion of the liquid sample is received (e.g., becomes seated) in the groove or notch 924. The vaporization chamber portion includes the carrier gas channel 450 that extends through the intermediate structure 936 and reaches the piston bore 408 to provide carrier gas channel therein to flow from the sample output 416 (e.g., where the carrier gas is received from the gas chromatograph device).

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A sample valve, comprising:
an actuator;
a valve body portion forming a piston chamber, the valve body portion being removably connected to the actuator and containing a sample chamber configured to receive a fluid sample and extending from a receiver to a delivery portion of a piston chamber;
wherein the piston chamber extends from a pneumatic chamber formed in the actuator to a sample output and comprising a first seal on a first side of the delivery portion, a second seal on a second side of the delivery portion, and a vaporization chamber between the second seal and the sample output; and
a piston stem comprising a notch of a predetermined volume configured to receive the fluid sample in the delivery portion and carry the fluid sample seated in the groove past the second seal into the vaporization chamber when the piston stem is driven through the piston chamber.

2. The sample valve of claim 1, wherein the sample chamber and piston chamber are arranged in a unitary valve body.

3. The sample valve of claim 1 or 2, further comprising a sleeve having a hollow cylindrical shape that forms part of the piston chamber and a sample flow guide having a funnel shape that directs the fluid sample the sample from the sample chamber towards the piston bore.

4. The sample valve of claim 3, wherein the sample chamber extends in a direction perpendicular to the piston chamber.

5. The sample valve of one of the preceding claims, wherein the vaporization chamber comprises an inner wall of a radius greater than a radius of an outer wall of the piston stem, wherein a gap is formed between the inner wall and the outer wall that defines a travel space, and wherein the travel space is configured to receive the fluid sample.

6. The sample valve of claim 5, further comprising a carrier gas channel extending to the vaporization chamber, the carrier gas channel configured to provide a carrier gas to the fluid sample in the travel space before the fluid sample enters the sample output.

7. The sample valve of claim 5 or 6, wherein the vaporization chamber maintains axial alignment with the sample chamber and piston chamber.

8. The sample valve of one of the preceding claims, wherein the notch extends radially into the piston stem.

9. The sample valve of one of the preceding claims, wherein the pneumatic chamber is removably connected with the valve body portion.

10. The sample valve of one of the preceding claims, further comprising a heater configured to apply heat to the vaporization chamber when the fluid sample is received in the vaporization chamber.

11. The sample valve of one of the preceding claims, wherein the sample output is thermally isolated from the sample chamber through at least one air gap disposed between the valve body portion and the vaporization chamber.

12. The sample valve of claim 11, further comprising an intermediate structure acting as a thermal insulating mass to provide resistance for heat traveling to the sample chamber via the vaporization chamber.

13. A gas chromatography system, comprising:
a sample valve, comprising:
a sample chamber configured to receive a fluid sample and extending from a receiver to a delivery portion of a piston chamber;
the piston chamber extending from a pneumatic chamber to a sample output and comprising a first seal on a first side of the delivery portion, a second seal on a second side of the delivery portion, and a vaporization chamber between the second seal and the sample output;
and a piston stem comprising a notch of a predetermined volume configured to receive the fluid sample in the delivery portion and carry the fluid sample seated in the groove past the second seal into the vaporization chamber when the piston stem is driven through the piston chamber;
a gas feedthrough configured to deliver a vaporized sample from the sample output to an analytical module;
and a gas chromatography module configured to receive the vaporized sample from the analytical module and measure an attribute of the vaporized sample.

14. The gas chromatography system of claim 13, wherein the sample valve is a modular assembly that includes an actuator configured to drive the piston stem, and a valve body portion at least partially forming the piston chamber and disposed between the actuator and the gas feedthrough.

15. The gas chromatography system of claim 14, wherein the sample chamber extends in a direction perpendicular to the piston chamber within the valve body portion.

16. A modular sample valve system, comprising:
a sample valve,
a gas feed through,
an analytical module, and
a gas chromatography module,
wherein the sample valve, is removably connected to the gas feed through, and to the gas chromatography module to form, together, a system of modules;
wherein the system of modules is mountable to an explosion proof housing, and
wherein the gas feedthrough is formed as an assembly that includes a gas feed through body and a gas feedthrough core that concentrically floats internally to the gas feedthrough between the gas feedthrough and the sample valve.

17. The modular sample valve system of claim 16, wherein the sample valve is removably attached in an aligned fashion to the gas feedthrough.

18. The modular sample valve system of claim 16 or 17, wherein fluid connections of the sample valve are restricted such that an explosion does not propagate to the sample valve or to the analytical module.

19. The modular sample valve system of one of claims 16 to 18, wherein the gas feed through assembly is mounted via a threaded interface into the explosion proof housing.

20. The modular sample valve of claim 19, wherein the gas feedthrough core restricts fluid flow such that an explosion shall not propagate to the analytical module or to the exterior of the explosion proof housing.
